# EUROPEAN PATENT SPECIFICATION

(11) **EP 0 614 606 B1**
(45) Date of publication and mention of the grant of the patent: **10.09.2003**
(21) Application number: 94810081.3
(22) Date of filing: 15.02.1994
(51) Int. Cl.: A01N 43/10

(54) **Herbicidal compositions**
Herbizide Mischungen
Compositions herbicides

(30) Priority: 18.02.1993 US 19386; 19.02.1993 US 19933; 25.06.1993 GB 9313210
(43) Date of publication of application: 14.09.1994
(60) Divisional application: 03012564.5
(73) Proprietor: BASF AKTIENGESELLSCHAFT, 67056 Ludwigshafen (DE)
(72) Inventor: Fenderson, John Melvin, Kiowa, Kansas 67070 (US); O'Neal, William Ben, Buffalo Grove, Ill. 60089 (US); Quaghebeur, Theo, B-7030 Saint-Symphorien (BE); Schumm, Karl-Christof, 13.044-230 Campinas - 5P (BR); Van Loocke, Walter, B-8377 Meerkerke (BE)

(56) References cited:
- EP-A- 0 380 447
- EP-A- 0 480 902
- EP-A- 0 531 271
- WO-A-92/10098
- GB-A- 2 114 566
- US-A- 4 666 502
- PROC. 45TH N.Z. PLANT PROT. CONF., 1992, pages 84-88, XP000610749 A.RAHMAN, T.K.JAMES: "weed control and soil persistence studies with dimethenamide in maize"
- J.R.CORBETT: "The biochemical mode of action of pesticides" 1974 , ACADEMIC PRESS , LONDON XP002020128 * page 209-210 *
- BRIGHTON CROP PROTECTION CONFERENCE- WEEDS, vol. 1, pages 87-92, XP000610742 J.HARR, K. SECKINGER E. UMMEL: "san 582- a new herbicide for weed control in corn and soybeans"
- LEE D.L. ET AL: 'The structure-activity relationships of the triketone class of HPPD herbicides' PESTICIDE SCIENCE vol. 54, December 1998, pages 377 - 384

## Description

The present invention concerns a method of controlling undesired plant growth employing co-application of dimethenamid and at least one other herbicide from the group of triketones, herbicidal compositions comprising dimethenamid and at least one other herbicide from the group of triketones and the use of such compositions in controlling undesired plant growth.

Dimethenamid (FRONTIER®) whose chemical name is 2-chloro-N-(2,4-dimethyl-3-thienyl)-N-(2-methoxy-1-methylethyl)-acetamide, processes for its production, herbicidal compositions containing it and its use as a herbicide are described in US Patent 4,666,502 the contents of which are incorporated herein by reference. Dimethenamid consists of 4 stereoisomers due to two chiral elements and can thus also exist in the form of the individual isomers as diastereomeric mixtures (1S, aRS (known as S-dimethenamid) and 1R, aRS (known as R-dimethenamid)) and as a racemic mixture (1RS, aRS). References herein to dimethenamid refer to its various forms unless otherwise stated. Of the diastereomeric mixtures S-dimethenamid is preferred.

The term herbicides, as used herein, refers to compounds which combat or control undesired plant growth. This class of compounds may be divided into sub-classes according to the primary type or mode of action the herbicide has on the plant. For example according to G.F. Warren of Purdue University, Indiana, USA, herbicides can be classified as auxin transport inhibitors, growth regulator herbicides, photosynthesis inhibitors, pigment inhibitors, growth inhibitors, amino acid synthesis inhibitors, lipid biosynthesis inhibitors, cell wall biosynthesis inhibitors, rapid cell membrane disruptors as well as "miscellaneous" herbicides which do not come under one of the preceding categories.

It has now surprisingly been found that co-application of dimethenamid and at least one other herbicide from the group of triketones results in better and in some cases longer-lasting control of undesired plant growth. This synergistic effect exhibits itself in a high degree of control at co-application rates which are significantly lower than the rate of each individual compound required to obtain the same degree of control. Furthermore, at any given co-application rate the degree of control is higher than the additive effect obtained for the individual components at the same rate. In some cases both speed of activity and level of control are enhanced and/or weeds can be controlled which are not controlled by either component at economical rates.

This synergistic effect allows for satisfactory control at reduced application rates for each component and even at levels which if applied for a particular component alone would give insufficient control. Additionally, longer residual control may be achieved. This provides for significant economic and environmental advantages in the use of dimethenamid and the herbicide(s) used in combination therewith.

Co-application can be achieved using tank mixes of preformulated individual active ingredients, simultaneous or sequential (preferably 1-2 days) application of such formulations or application of preformulated fixed pre-mix combinations of the individual active ingredients.

Examples of herbicides which may be used in combination with dimethenamid in accordance with the invention include triketones of the type described in US Patents 4,695,673; 4,869,748; 4,921,526; 5,006,150; 5,089,046, US Patent Applications 07/411,086 (and EP-A-338,992); and 07/994,048 (and EP-A-394,889 and EP-A-506,907) as well as EP-A-137,963; EP-A-186,118; EP-A-186,119, EP-A-186,120; EP-A-249,150; EP-A-336,898; the contents of each of which are incorporated herein by reference. Examples of such triketones are sulcotrione (MIKADO®) whose chemical designation is 2-(2-chloro-4-methanesulfonylbenzoyl)-1,3-cyclohexane dione; 2-(4-methylsulfonyloxy-2-nitrobenzoyl)-4,4,6,6-tetramethyl-1,3-cyclohexanedione; 3-(4-methylsulfonyloxy-2-nitrobenzoyl)-bicyclo[3,2,1]octane-2,4-dione; 3-(4-methylsulfonyl-2-nitrobenzoyl)-bicylco[3,2,1]octane-2,4-dione; 4-(4-chloro-2-nitrobenzoyl)-2,6,6-trimethyl-2H-1,2-oxazine-3, 5 (4H,6H)-dione; 4-(4-methylthio-2-nitrobenzoyl)-2,6,6-trimethyl-2H-1,2-oxazine-3,5(4H,6H)-dione; 3-(4-methylthio-2-nitrobenzoyl) -bicyclo[3,2,1]octane-2,4-dione; 4-(2-nitro-4-trifluoromethoxybenzoyl)-2,6,6-trimethyl-2H-1,2-oxazine-3,5(4H,6H)-dione.

The present invention therefore concerns a method of combating or controlling undesired plant growth or otherwise regulating plant growth which comprises co-applying to a locus where such combating or control is desired an herbicidally or plant growth regulating effective aggregate amount of dimethenamid and at least one other herbicide from the group of triketones.

Application rates for co-application will of course vary depending upon climatic conditions, season, soil ecology, weeds to be combated and the like, however, successful results can be obtained e.g. with rates of dimethenamid of 0.1 to 3.0 kg/ha, preferably 0.1 to 2.0 kg/ha, especially 0.25 to 1.5 kg/ha e.g. 0.9 to 1.5 kg/ha in co-application with rates for partner herbicides which correspond to or are significantly lower than recommended for use thereof individually.

The suitability of specific co-applications for pre- or post-emergent uses and selectively will of course depend an the partners chosen.

The activity of dimethenamid is described in the above mentioned patents and that of suitable herbicidal partners is described in the literature or an commercially available forms thereof (cf also CROP PROTECTION CHEMICALS REFERENCE, 9th edition (1993) Chemical & Pharmaceutical Press, NY, NY; The Pesticide Manual, 9th edition (1991), British Crop Protection Council, London; Ag Chem New Product Review, Ag Chem Information Services, Indianapolis, Indiana; Farm Chemicals Handbook, 1993 edition, Meister Publishing Company, Willoughby, Ohio and the like).

The invention also provides herbicidal or plant growth regulating compositions comprising an herbicidally effective aggregate amount of dimethenamid and at least one other herbicide from the group of triketones.

Such compositions contain the active substances in association with agriculturally acceptable diluents. They may be employed in either solid or liquid forms e.g. in the form of a wettable powder or an emulsifiable concentrate, incorporating conventional diluents. Such compositions may be produced in conventional manner, e.g. by mixing the active ingredient with a diluent and optionally other formulating ingredients such as surfactants and oils.

The term diluents as used herein means any liquid or solid agriculturally acceptable material which may be added to the active constituent to provide a more easily or improved applicable form, or to achieve a usable or desirable strength of activity. Examples of diluents are talc, kaolin, diatomaceous earth, xylene, non-phytotoxic oils, or water.

Particular formulations, to be applied in spraying forms such as water dispersible concentrates or wettable powders, may contain surfactants such as wetting and dispersing agents, e.g. the condensation product of formaldehyde with naphthalene sulphonate, an alkylarylsulphonate, a lignin sulphonate, a fatty alkyl sulphate, an ethoxylated alkylphenol or an ethoxylated fatty alcohol.

In general, the formulations include from 0.01 to 90% by weight of active agent(s) and from 0 to 20% by weight of agriculturally acceptable surfactant, the active agent consisting of dimethenamid and at least one other herbicide from the group of triketones. Concentrate forms of compositions generally contain between about 2 and 90%, preferably between about 5 and 80% by weight of active agent. Application forms of formulation may for example contain from 0.01 to 20% by weight of active agent.

When employing concurrent, immediately sequential or tank mix applications the herbicide partner(s) can be employed in commercially available form if appropriate and at rates equivalent to or preferably below those recommended by the manufacturer or in the references cited above. Dimethenamid can also be applied in commercially available form (e.g., as FRONTIER® herbicide) or as formulated e.g. as described in the above-mentioned US 4,666,502.

On co-application according to the present invention other compounds having biological activity, e.g. compounds having insecticidal or fungicidal activity, may also be included.

The preferred mode of application is tank mix prepared e.g. by adding dimethenamid to a tank containing the other herbicide partner and an appropriate surfactant or vice versa depending an the type of herbicide partner chosen. It is advisable to consult labels of mixing partners and to conduct compatibility tests prior to mixing.

Depending an the choice of co-application partners both pre- and post-emergence activity on a large range of broadleaf and grassy weeds may be achieved. Examples of such weeds are

| | |
|---|---|
| Agropyron repens | - quackgrass |
| Brachiaria platyphylla | - broadleaf signalgrass |
| Bromus spp. | - e.g. downybrome |
| Cenchrus spp. | - e.g. southern sandbur, sandbur, field sandbur |
| Dactyloctenium aegyptium | - crowfootgrass |
| Digitaria spp. | - e.g. crabgrass, smooth crabgrass, large crabgrass |
| Echinochloa crus-galli | - barnyardgrass |
| Eleusine indica | - goosegrass |
| Eriochloa spp. | - e.g. southwestern cupgrass, prairie cupgrass, woolly cupgrass |
| Leptochloa filiformis | - red spangletop |
| Oryza sativa | - red rice |
| Panicum spp. | - e.g. witchgrass and fall-, browntop-and texas-panicum, wild proso millet |
| Poa annua | - annual bluegrass |
| Setaria spp. | - e.g. giant foxtail, foxtail millet, yellow foxtail, bristly foxtail, green foxtail |
| Sorghum almum | - sorghum almum |
| Sorizhum bicolor | - shattercane |
| Sorte halepense | - seedling johnson grass |
| Urochloa panicoides | - liverseedgrass |
| Acanthospermum hispidum | - bristly starbur |
| Amaranthus spp. | - e.g. pigweed, tumble pigweed, smooth pigweed, redroot pigweed, prostrate pigweed, waterhemp, spiny amaranth |
| Ambrosia artemisiifolia | - common ragweed |
| Bidens pilosa | - hairy beggarticks |
| Capsella bursa-pastoris | - shepherdspurse |
| Chenopodium album | - common lambsquarters |
| Cleome monophylla | - spindlepod |
| Commelina spp | - e.g. dayflower |
| Crotalaria sphaerocarpa | - wild lucerne |
| Datura stranionium | - jimsonweed |
| Desmodium tortuosum | - Florida beggarweed |
| Euphorbia nutans | - Nodding spurge |
| Euphorbia maculata | - spotted surge |
| Galinsoga parviflora | - Smallflower galinsoga |
| Ipomea spp. | - e.g. ivyleaf-, tall-, pitted morningglory |
| Lamium purpureum | - purple deadnettle |
| Matricaria chamomilla | - wild chamomile |
| Mollugo verticillata | - carpetweed |
| Papaver rhoeas | - corn poppy |
| Polygonum spp. | - e.g. smartweed, annual smartweed, wild buckwheat, prostrate knotweed |
| Portulaca oleracea | - common purslane |
| Richardia scabra | - Florida pusley |
| Schkuhria pinnata | - dwarf marigold |
| Sida spinosa | - prickly sida |
| Solanum spp. | - e.g. black nightshade, E. black nightshade, hairy nightshade, silverleaf nightshade |
| Stellaria media | - common chickweed |
| Tagetes minuta | - wild marigold (khaki weed) |
| Cyperus esculentis | - yellow nutsedge |
| Cyperus iria | - rice flatsedge |

In addition the following weeds may also be controlled when employing appropriate mixing partners.

| | |
|---|---|
| Abutilon theophrasti | - velvetleaf |
| Hibiscus trionum | - Venice mallow |
| Avena fatua | - wild oats |
| Sinapis alba | - white mustard |
| Xanthium strumarium | - common cocklebur |
| Cassia obtusifolia | - sicklepod |
| Apera spica-venti | - windgrass |
| Campsis radicans | - trumpet creeper |
| Rottboellia exaltata | - itchgrass |
| Cynodon dactylon | - bermudagrass |
| Lespedeza spp. | - e.g. lespedezas |
| Trifolium spp. | - e.g. clovers |
| Hippuris vulgaris | - marestail |
| Asclepias spp. | - e.g. milkweeds |
| Salvia spp. | - e.g. lanceleaf sage |
| Salsola iberica | - Russian thistle |
| Convolvulus arvensis | - field bindweed |
| Cirsium arvense | - Canada thistle |
| Proboscidea louisianica | - devilsclaw |
| Senecio spp. | - e.g. common groundsel |
| Chorispora tennela | - blue mustard |
| Alopecurus myosuroides | - blackgrass |
| Sisymbrium altissimum | - tumble mustard |
| Caperionia palustris | - texasweed |

Crop selectivity will also usually depend upon choice of partners. Dimethenamid exhibits excellent selectivity in corn (maize), soybean and several other crops.

The co-application of the combination of dimethenamid and triketone(s) according to present invention is especially suitable in crops of monocotyledons, such as cereals, maize and rice. However, application in maize corps being infested with monocotyledonous and dicotyledonous weeds is most advantageous, as harmful effects against the crop plants are not enhanced. Both pre- and postemergence application to the undesired weeds is possible with this preferred combination. However, the preferred time point of application in maize is after emergence of the maize seedlings.

Application rates for co-application of dimethenamid and a triketone will of course vary depending upon climatic conditions, season, soil ecology, weeds to be combated and the like, however, successful results can be obtained, e.g. in co-application with rates of the triketone which are significantly lower than recommended for use thereof alone; e.g. 0.01 to 2 kg/ha, preferably 0.1 to 1 kg/ha, especially 0.1 to 0.6 kg/ha.

From this group combinations are preferred wherein the triketone is selected from 4-(4-chloro-2-nitrobenzoyl)-2,6,6-trimethyl-2H-1,2-oxazine-3,5-(4H, 6H) dione, and sulcotrione, with sulcotrione being preferred.

The most preferred is the combination of this type is that of sulcotrione and dimethenamid. The mixture ratio will be determined according to the specific soil, crop and climate condition of use. As an example the co-application rates will be in the range of 0.9 to 1.5 kg/ha of dimethenamid and 0.15 to 0.45 kg/ha of sulcotrione. The ratio of the active ingredient in the composition by weight of sulcotrione and dimethenamid is between 1:2 and 1:10.

For the co-application in a preferred 3-way mix comprising dimethenamid and a triketone the third component is preferably selected from the group of triazine herbicides e.g. atrazine, metribuzin, cyanazine, simazine, prometon, ametryn, prometryn, hexazinone. In a typical 3-way mix the triazine component will be present in a ratio of 3 : 1 to 1 : 3 relative to the dimethenamid contents, with an excess of dimethenamid being preferred, i.e. a preferred ratio of 1 : 1 to 1 : 3, e.g. 1 : 1.5. The preferred triazine herbicide in this type of a 3-way mix is atrazine.

It will be appreciated that mixtures of dimethenamid with more than one herbicide from the group of triketones e.g. 3-way mixes are also included within the purview of the invention.

Examples of specific mixing partners can be selected for example from the following: sulcotrione (e.g. as MIKADO®) and 4-(4-chloro-2-nitro-benzoyl)-2,6,6-trimethyl-2H-1,2-oxazine-3,5-(4H,6H) dione (Compound Group I).

Further examples of specific mixing partners for 3-way mix are sulcotrione (e.g. as MIKADO®) and atrazine (e.g. as GESAPRIM®) (Compound Group Ia).

According to the desired weed spectrum, time of application and the like other specific herbicides listed above are also particular examples of suitable mixing partners.

### EXAMPLE 1

Active ingredients are weighed and dissolved in a stock solution consisting of acetone: deionized water, 1:1, and 0.5% adjuvant mixture consisting of surfactants SPAN® 20:TWEEN® 20:TWEEN® 85, 1:1:1. Dilutions from this stock solution are performed to allow for preparation of spray solutions consisting of single doses of individual or combined active ingredients. Each dose is applied simultaneously via a linear track sprayer set to deliver 600 liters/ha spray volume to both the foliage of the selected weed seedling species, post-emergence application, and the surface of soil that had been previously sown with seeds, pre-emergence application. The seedlings used are cultured to develop plants at the two- to early three-leaf stage. The stage of development of each seedling at application time is recorded. After application, the treated plants are transferred to the greenhouse and held until termination of the experiment within four weeks. Symptoms of injury are recorded two and ten days after post-emergence application and fourteen days after pre-emergence application. Visual percentage ratings of crop injury and weed control are taken ten and twenty-eight days after post-emergence application and fourteen and twenty-eight days after pre-emergence application.

Co-application of dimethenamid with other specific active ingredients such as outlined above produces improved herbicidal effects compared with application of each active ingredient alone.

### EXAMPLE 2

Small field units in a maize field, infested with echinochloa crus-galli and solanum nigrum are sprayed with a tank-mix suspension of dimethenamid and sulcotrione. The stage of the weeds is "full tillering" for echinochloa crus-galli and "8-leaves stage" for solanum nigrum. The lot size is 8 meters in length and 3 meters in broadth. The application rates are 1.1 kg/ha of dimethenamid and 0.15 kg/ha of sulcotrione. Seven days after treatment the efficacy is evaluated, both as control of the weeds and as tolerance of the crop plants.

In this test the control of echinochloa was between 93 and 98%, and the control of solanum was between 91 and 93% in three repetitions, while the damage of the maize plants was always below 10%.

### EXAMPLE 3

Small Field units in a maize field, infested with echinochloa crus-galli, solanum nigrum and chenopodium album are sprayed with a tank-mix suspension of dimethenamid, sulcotrione and atrazine. The stage of the weeds is "full tillering" for echinochloa and "6-8 leaves stage" for solanum and chenopodium. The lot size is 8 meters in length and 3 meters in breadth. The application rates are 1.08 kg/ha of dimethenamid, 150 or 210 g/ha of sulcotrione and 750 g/ha of atrazine. 14 days after treatment the efficacy is evaluated. The results (in percentage control) were as follows:

| Compound a.i./ha | Echinochloa control | Expected additive effect | Synergistic effect |
|---|---|---|---|
| Atrazine 1500 | 23 | - | |
| Dimethenamid/Atrazine 1080/750 | 30 | | |
| Sulcotrione/Atrazine 150/750 | 26 | | |
| Sulcotrione/Atrazine 210/750 | 33 | | |
| Dimethenamid/Sulcotrione/Atrazine 1080/150/750 | 95 | 56 | + 39 |
| Dimethenamid/Sulcotrione/Atrazine 1080/210/750 | 97 | 59 | + 42 |
| | Solanum/Chenopodium | | |
| Atrazine 1500 | 16 | | |
| Dimethenamid/Atrazine 1080/750 | 36 | | |
| Sulcotrione/Atrazine 150/750 | 23 | | |
| Sulcotrione/Atrazine 210/750 | 53 | | |
| Dimethenamid/Sulcotrione/Atrazine 1080/ 150/750 | 97 | 53 | + 44 |
| Dimethenamid/Sulcotrione/Atrazine 1080/210/750 | 100 | 89 | + 11 |

The synergic effect is clearly visible at the lower rates of sulcotrione, resulting in a nearly doubled degree of control, compared to the expected additive efficacies. For the higher rates of sulcotrione (> 300 g/ha), only the additive effect remains visible since the total control is 100%.

## Claims

1. A method of controlling undesired plant growth which comprises co-application to the locus of said undesired plants growth dimethenamid and at least one other herbicide from the group of triketones in a herbicidally effective aggregate amount.

2. A method according to claim 1, wherein the other herbicide is a triketone herbicide selected from the group comprising 2-(2-chloro-4-methanesulfonylbenzoyl)-1,3-cyclohexanedione; 2-(4-methylsulfonyloxy-2-nitrobenzoyl)-4,4,6,6-tetramethyl-1,3-cyclohexanedione; 3-(4-methylsulfonyloxy-2-nitrobenzoyl)-bicyclo[3,2,1]octane-2,4-dione; 3-(4-methylsulfonyl-2-nitrobenzoyl)-bicyclo[3,2,1]octane-2,4-dione; 4-(4-chloro-2-nitrobenzoyl)-2,6,6-trimethyl-2H-1,2-oxazine-3,5(4H, 6H)dione; 4-(4-methylthio-2-nitrobenzoyl)-2,6,6-trimethyl-2H-1,2-oxazine-3,5(4H,6H)-dione; 3-(4-methylthio-2-nitrobenzoyl)-bicyclo[3,2,1]octane-2,4-dione; 4-(2-nitro-4-trifluoromethoxybenzoyl)-2,6,6-trimethyl-2H-1,2-oxazine-3,5-(4H,6H)-dione.

3. A method according to claim 1 wherein the amount of dimethenamid is from 0.1 to 3.0 kg/ha, preferably 0.25 to 1.5 kg/ha.

4. A method according to claim 2, wherein the amount of triketone is from 0.05 to 2 kg/ha, preferably 0.1 to 0.6 kg/ha.

5. A herbicidal composition comprising a herbicidally effective aggregate amount of dimethenamid and at least one other herbicide from the group of triketones, and an agriculturally acceptable carrier.

6. A composition according to claim 5, **characterized in that** it contains dimethenamid and at least one other herbicide in a quantity producing a synergistic herbicidal effect.

7. A composition according to claim 5, wherein the other herbicide is selected from the group comprising selected from the group comprising 2-(2-chloro-4-methanesulfonylbenzoyl)-1,3-cyclohexanedione; 2-(4-methylsulfonyloxy-2-nitrobenzoyl) -4,4,6,6-tetramethyl-1,3-cyclohexanedione; 3-(4-methylsulfonyloxy-2-nitrobenzoyl)-bicyclo[3,2,1]octane-2,4-dione; 3-(4-methylsulfonyl-2-nitro-benzoyl)-bicyclo[3,2,1]octane-2,4-dione; 4-(4-chloro-2-nitrobenzoyl)-2,6,6-trimethyl-2H-1,2-oxazine-3,5(4H, 6H)dione; 4-(4-methylthio-2-nitrobenzoyl)-2,6,6-trimethyl-2H-1,2-oxazine-3,5(4H,6H)-dione; 3-(4-methylthio-2-nitrobenzoyl)-bicyclo[3,2,1]octane-2,4-dione; 4-(2-nitro-4-trifluoromethoxy-benzoyl)-2,6,6-trimethyl-2H-1,2-oxazine-3,5-(4H,6H)-dione.

8. A composition according to claim 5 comprising dimethenamid and sulcotrione as active components.

9. A composition according to claim 5 comprising dimethenamid, a triketone and a triazine herbicide.

10. A composition according to claim 9 wherein the triazine herbicide is atrazine.

11. A composition according to claim 10 comprising dimethenamid, sulcotrione and atrazine as active components.

12. A composition according to claim 5 comprising a herbicidally effective aggregate amount of S-dimethenamid and at least one other herbicide from the group of triketones, and an agriculturally acceptable carrier.

13. A method according to claim 1 which comprises co-application to the locus of said undesired plants growth S-dimethenamid and at least one other herbicide from the group of triketones in a herbicidally effective aggregate amount.

## Patentansprüche

1. Verfahren zur Bekämpfung von unerwünschtem Pflanzenwuchs, **dadurch gekennzeichnet, daß** man auf den Ort des unerwünschten Pflanzenwuchses Dimethenamid und mindestens ein anderes Herbizid aus der Gruppe der Triketone gemeinsam in einer herbizidwirksamen Gesamtmenge ausbringt.

2. Verfahren nach Anspruch 1, wobei es sich bei dem anderen Herbizid um ein Triketonherbizid aus der Gruppe 2-(2-Chlor-4-methansulfonylbenzoyl)-1,3-cyclohexandion, 2-(4-Methylsulfonyloxy-2-nitrobenzoyl)-4,4,6,6-tetramethyl-1,3-cyclohexandion, 3-(4-Methylsulfonyloxy-2-nitrobenzoyl)-bicyclo[3,2,1]octan-2,4-dion, 3-(4-Methylsulfonyl-2-nitrobenzoyl)-bicyclo[3,2,1]octan-2,4-dion, 4-(4-Chlor-2-nitrobenzoyl)-2,6,6-trimethyl-2H-1,2-oxazin-3,5(4H,6H)dion, 4-(4-Methylthio-2-nitrobenzoyl)-2,6,6-trimethyl-2H-1,2-oxazin-3,5(4H,6H)dion, 3-(4-Methylthio-2-nitrobenzoyl)-bicyclo[3,2,1]octan-2,4-dion und 4-(2-Nitro-4-trifluormethoxybenzoyl)-2,6,6-trimethyl-2H-1,2-oxazin-3,5(4H,6H)dion handelt.

3. Verfahren nach Anspruch 1, wobei die Dimethenamidmenge 0,1 bis 3,0 kg/ha, vorzugsweise 0,25 bis 1,5 kg/ha, beträgt.

4. Verfahren nach Anspruch 2, wobei die Triketonmenge 0,05 bis 2 kg/ha, vorzugsweise 0,1 bis 0,6 kg/ha, beträgt.

5. Herbizide Zusammensetzung, die eine herbizidwirksame Gesamtmenge an Dimethenamid und mindestens einem anderen Herbizid aus der Gruppe der Triketone sowie einen landwirtschaftlich unbedenklichen Träger enthält.

6. Zusammensetzung nach Anspruch 5, **dadurch gekennzeichnet, daß** sie Dimethenamid und mindestens ein anderes Herbizid in solch einer Menge enthält, daß eine synergistische Herbizidwirkung erzielt wird.

7. Zusammensetzung nach Anspruch 5, wobei das andere Herbizid aus der Gruppe 2-(2-Chlor-4-methansulfonylbenzoyl)-1,3-cyclohexandion, 2-(4-Methylsulfonyloxy-2-nitrobenzoyl)-4,4,6,6-tetramethyl-1,3-cyclohexandion, 3-(4-Methylsulfonyloxy-2-nitrobenzoyl)-bicyclo[3,2,1]octan-2,4-dion, 3-(4-Methylsulfonyl-2-nitrobenzoyl)-bicyclo[3,2,1]octan-2,4-dion, 4-(4-Chlor-2-nitrobenzoyl)-2,6,6-trimethyl-2H-1,2-oxazin-3,5(4H,6H)dion, 4-(4-Methylthio-2-nitrobenzoyl)-2,6,6-trimethyl-2H-1,2-oxazin-3,5(4H,6H)dion, 3-(4-Methylthio-2-nitrobenzoyl)-bicyclo[3,2,1]octan-2,4-dion und 4-(2-Nitro-4-trifluormethoxybenzoyl)-2,6,6-trimethyl-2H-1,2-oxazin-3,5(4H,6H)dion stammt.

8. Zusammensetzung nach Anspruch 5, die als Wirkbestandteile Dimethenamid und Sulcotrion enthält.

9. Zusammensetzung nach Anspruch 5, die als Wirkbestandteile Dimethenamid, ein Triketon und ein Triazinherbizid enthält.

10. Zusammensetzung nach Anspruch 9, wobei es sich bei dem Triazinherbizid um Atrazin handelt.

11. Zusammensetzung nach Anspruch 10, die als Wirkbestandteile Dimethenamid, Sulcotrion und Atrazin enthält.

12. Zusammensetzung nach Anspruch 5, die eine herbizidwirksame Gesamtmenge an S-Dimethenamid und mindestens einem anderen Herbizid aus der Gruppe der Triketone sowie einen landwirtschaftlich unbedenklichen Träger enthält.

13. Verfahren nach Anspruch 1, **dadurch gekennzeichnet, daß** man auf den Ort des unerwünschten Pflanzenwuchses S-Dimethenamid und mindestens ein anderes Herbizid aus der Gruppe der Triketone gemeinsam in einer herbizidwirksamen Gesamtmenge ausbringt.

## Revendications

1. Procédé de lutte contre la croissance de plantes indésirables qui comprend la co-application sur le site de ladite croissance de plantes indésirables de diméthénamid et d'au moins un autre herbicide du groupe des tricétones en une quantité globale efficace comme herbicide.

2. Procédé selon la revendication 1, dans lequel l'autre herbicide est un herbicide tricétonique choisi dans le groupe comprenant la 2-(2-chloro-4-méthanesulfonylbenzoyl)-1,3-cyclohexanedione; la 2-(4-méthylsulfonyloxy-2-nitrobenzoyl)-4,4,6,6-tétraméthyl-1,3-cyclohexanedione ; la 3-(4-méthylsulfonyloxy-2-nitrobenzoyl)-bicyclo[3,2,1]octane-2,4-dione ; la 3-(4-méthylsulfonyl-2-nitrobenzoyl)-bicyclo[3,2,1]octane-2,4-dione ; la 4-(4-chloro-2-nitrobenzoyl)-2,6,6-triméthyl-2H-1,2-oxazine-3,5-(4H,6H)-dione ; la 4-(4-méthylthio-2-nitrobenzoyl)-2,6,6-triméthyl-2H-1,2-oxazine-3,5(4H,6H)dione ; la 3-(4-méthylthio-2-nitrobenzoyl)-bicyclo[3,2,1]octane-2,4-dione ; la 4-(2-nitro-4-trifluorométhoxybenzoyl)-2,6,6-triméthyl-2H-1,2-oxazine-3,5-(4H,6H)-dione.

3. Procédé selon la revendication 1 dans lequel la quantité de diméthénamid est de 0,1 à 3,0 kg/ha, de préférence 0,25 à 1,5 kg/ha.

4. Procédé selon la revendication 2, dans lequel la quantité de tricétone est de 0,05 à 2 kg/ha, de préférence 0,1 à 0,6 kg/ha.

5. Composition herbicide comprenant une quantité globale efficace comme herbicide de diméthénamid et d'au moins un autre herbicide du groupe des tricétones, et un support acceptable sur le plan agricole.

6. Composition selon la revendication 5, **caractérisée en ce qu'**elle contient du diméthénamid et au moins un autre herbicide en une quantité produisant un effet herbicide synergique.

7. Composition selon la revendication 5, dans laquelle l'autre herbicide est choisi dans le groupe comprenant la 2-(2-chloro-4-méthanesulfonylbenzoyl)-1,3-cyclohexanedione ; la 2-(4-méthylsulfonyloxy-2-nitrobenzoyl)-4,4,6,6-tétraméthyl-1,3-cyclohexanedione ; la 3-(4-méthylsulfonyloxy-2-nitrobenzoyl)-bicyclo[3,2,1]octane-2,4-dione ; la 3-(4-méthylsulfonyl-2-nitrobenzoyl)-bicyclo[3,2,1]octane-2,4-dione ; la 4-(4-chloro-2-nitrobenzoyl)-2,6,6-triméthyl-2H-1,2-oxazine-3,5-(4H,6H)-dione; la 4-(4-méthylthio-2-nitrobenzoyl)-2,6,6-triméthyl-2H-1,2-oxazine-3,5(4H,6H)dione ; la 3-(4-méthylthio-2-nitrobenzoyl)-bicyclo[3,2,1]octane-2,4-dione ; la 4-(2-nitro-4-trifluorométhoxybenzoyl)-2,6,6-triméthyl-2H-1,2-oxazine-3,5-(4H,6H)-dione.

8. Composition selon la revendication 5 comprenant du diméthénamid et de la sulcotrione comme composants actifs.

9. Composition selon la revendication 5 comprenant du diméthénamid, une tricétone et un herbicide de type triazine.

10. Composition selon la revendication 9 dans laquelle l'herbicide de type triazine est l'atrazine.

11. Composition selon la revendication 10 comprenant du diméthénamid, de la sulcotrione et de l'atrazine comme composants actifs.

12. Composition selon la revendication 5 comprenant une quantité globale efficace comme herbicide de S-diméthénamid et d'au moins un autre herbicide du groupe des tricétones, et un support acceptable sur le plan agricole.

13. Procédé selon la revendication 1 qui comprend la co-application sur le site de ladite croissance de plantes indésirables de S-diméthanamid et d'au moins un autre herbicide du groupe des tricétones en une quantité globale efficace comme herbicide.
